(19)

Europäisches Patentamt
European Patent Office
Office européen des brevets

(11) **EP 1 742 393 A2**

(12) **EUROPEAN PATENT APPLICATION**

(43) Date of publication:
 **10.01.2007 Bulletin 2007/02**

(51) Int Cl.:
 *H04H 1/00* (2006.01)

(21) Application number: **06013872.4**

(22) Date of filing: **04.07.2006**

(84) Designated Contracting States:
 **AT BE BG CH CY CZ DE DK EE ES FI FR GB GR HU IE IS IT LI LT LU LV MC NL PL PT RO SE SI SK TR**
 Designated Extension States:
 **AL BA HR MK YU**

(30) Priority: **04.07.2005 KR 20050059901**

(71) Applicant: **Samsung Electronics Co., Ltd.**
 **Suwon-si, Gyeonggi-Do (KR)**

(72) Inventors:
 • **Xu, Yi Ling**
 **Yeongtong-gu**
 **Suwon-si**
 **Gyeonggi-do (KR)**

• **Song, Jae-Yeon**
 **Yeongtong-gu**
 **Suwon-si**
 **Gyeonggi-do (KR)**
• **Jung, Ki-Ho**
 **Yeongtong-gu**
 **Suwon-si**
 **Gyeonggi-do (KR)**

(74) Representative: **Grünecker, Kinkeldey, Stockmair & Schwanhäusser Anwaltssozietät Maximilianstrasse 58 80538 München (DE)**

(54) **Apparatus and method for transmitting and receiving data in a digital multimedia broadcasting system**

(57)    An apparatus and method for transmitting and receiving broadcasting data in a DMB system are provided to reduce power consumption and implement smooth and seamless service handover. In the transmitting method, a frame group is constructed, which includes one frame group header and at least one signal frame including broadcasting data of a service. The frame group header includes service burst information about services included in at least one following frame group and a first parameter indicating the relative start time of each of the services. The frame group is transmitted in a broadcasting signal.

FIG.5

**EP 1 742 393 A2**

**Description**

**BACKGROUND OF THE INVENTION**

1. Field of the Invention

The present invention relates generally to a Digital Multimedia Broadcasting (DMB) system, and in particular, to an apparatus and method for transmitting and receiving data in a DMB system using frame slicing.

2. Description of the Related Art

At present, digital broadcasting is being standardized locally based on a variety of technologies. For example, broadcasting standards under discussion in China include Digital Multimedia Broadcasting-Terrestrial (DMB-T), Advanced Digital Television Broadcasting-Terrestrial (ADTB-T), and Digital Video Broadcasting-Terrestrial (DVB-T).

DMB service has branched into DMB-T and satellite DMB (S-DMB) according to the transmission media. Europe deploys services in DMB-T, whereas S-DMB prevails in the U.S. Multimedia service including mobile television service, and is scheduled in Eastern Asia for the first launch in the world.

Although a DMB-T transmission system is suitable for fixed terminals or portable/mobile terminals, it has yet to be developed into lightweight and less power-consuming technology for use in portable devices.

Compared to the terrestrial system, a portable system has the following main requirements.

(1) Power saving. A mobile handheld terminal requires gradually decreasing power consumption for Radio Frequency (RF) and baseband processing. Yet, a receiver must consume less power on an average in the mobile handheld terminal because battery capacity is limited and heat dissipation is difficult in a miniaturized device. Forthcoming advanced technology can save power by up to 90% in the mobile handheld terminal.

(2) Smooth and seamless service handover. For mobile reception in a DMB-T Multi-Frequency Network (MFN), if the reception quality of a current frequency is too low, the receiver needs to hand over to another frequency. Because DMB-T does not support seamless handover, a frequency change causes service interruption. The receiver scans other available frequencies and selects the best frequency or a frequency offering a sufficient reception quality. To do so, the receiver has to be equipped with an additional RF unit. Otherwise, interruption occurs at each frequency scanning. However, the use of the additional RF unit increases the cost of the receiver. Accordingly, there exists a need for performing seamless handover and scanning for a frequency without using an additional RF unit.

(3) RF performance for mobile single antenna reception. A Carrier-to-Noise Ratio (C/N) required for radio reception significantly affects network cost. The C/N is an important factor that determines whether a service of a high Quality of Service (QoS) level can be received at a high rate.

A DVB transmission system usually provides a bit rate of 10Mbps or higher. This high bit rate lends itself to a possibility to significantly reduce the average power consumption of a DVB receiver by introducing a scheme based on Time Division Multiplexing (TDM). This scheme is called time slicing.

The concept of time slicing sends data in bursts using a significantly higher instantaneous rate compared to the bit rate required if the data were transmitted continuously. Within a burst, the time ($\Delta$t) to the beginning of the next burst is indicated.

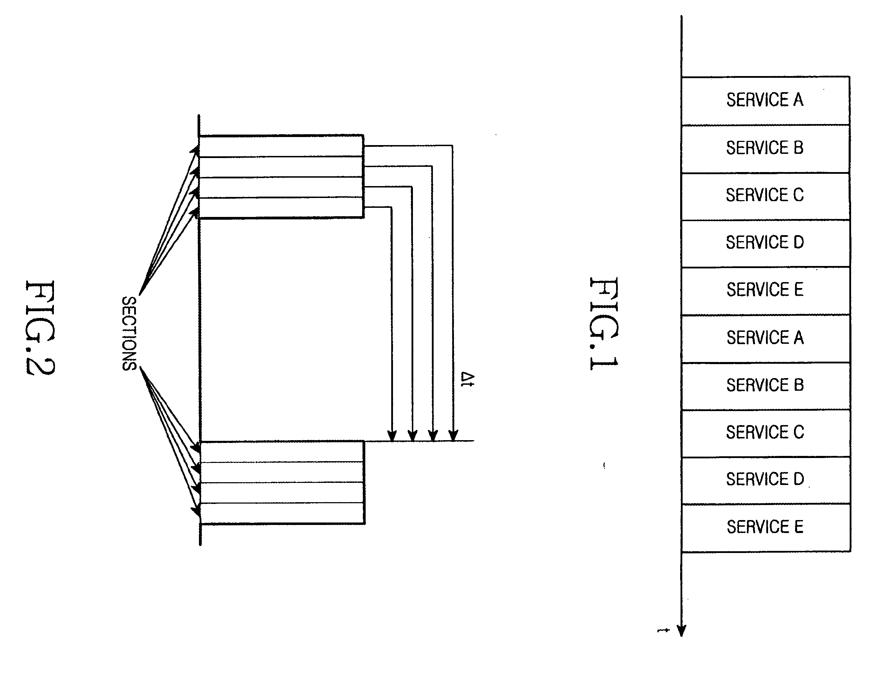

FIG 1 illustrates time slicing. Between bursts, data of an Element Stream (ES) is not transmitted, allowing other ESs to use the bit rate otherwise allocated, as illustrated in FIG 1.

This enables a receiver to stay active for only a fraction of the time, while receiving bursts of a requested service and to stay inactive for the other burst transmission periods (i.e. off-time). If a constant lower bit rate is required by the mobile handheld terminal, this may be provided by buffering the received bursts.

To get a reasonable power saving effect, the burst bit rate should be at least 10 times the constant bit rate of the delivered service. In case of a 350Kbps streaming service, this indicates a requirement of 4Mbps bit rate for the bursts. If the burst bit rate is only twice the constant bit rate, this lends itself to a near 50% power saving, which is still far from the required 90%.

The power consumption depends on the duty cycle of the time slicing scheme. A 10% duty cycle is assumed herein, which implies a 90% decrease in power consumption. The power consumption estimations take into account the duty cycle as well as the increase in power consumption due to the Multi-Protocol Encapsulation-Forward Error Correction (MPE-FEC). The results estimate about 2mW additional power consumption with 0.13$\mu$m technology, and about 1 mW using 0.18$\mu$m technology for the MPE-FEC.

It should be pointed out that these power consumption estimates assume that all Reed-Solomon (RS) codewords are always decoded. However, for most of the time in normal receiving conditions (particularly low speed reception), the RS decoding will not be used, because the MPEG-2 Transport Stream (TS) is already fully correct and no MPE-FEC decoding will be necessary. Even in situations where the MPE-FEC is used, it may be used only for a subset of the received bursts. This leads to the conclusion that for a mixture of receiving conditions (probably typical to real user behavior) the MPE-FEC will consume the additional 2mW estimate only occasionally. The effect on battery time will therefore be negligible.

Time slicing supports the possibility of using the receiver to monitor neighboring cells during off-times. By accomplishing the switching between TSs during an off period, the reception of a service is seemingly uninterrupted.

With proper care, the bursts of a certain Internet Protocol (IP) stream can be synchronized between neighboring cells in a way that the receiver can tune to the neighbor cell and continue receiving the IP stream without losing any data. Time slicing aims to reduce the power consumption in mobile handheld terminals.

Therefore, it is obvious that time slicing should be optimized from a terminal point of view. This selection also follows the DVB adopted rule of optimizing implementations on receivers, as their number is far higher than the number of transmitters. Also, the implementation cost on the network side is typically less critical compared to the terminal side.

FIG 2 illustrates MPE section headers each containing $\Delta t$ indicating time to the beginning of the next burst.

As $\Delta t$ indicates a relative time rather than an absolute one, this method is insensitive to any constant delays within a transmission path. However, jitter has an effect on the accuracy of $\Delta t$. This jitter is referred to as '$\Delta t$ jitter'. The receiver performs a jitter estimation in order to ensure that the wakeup time for the next burst is not mistakenly too late because of the current burst being delayed.

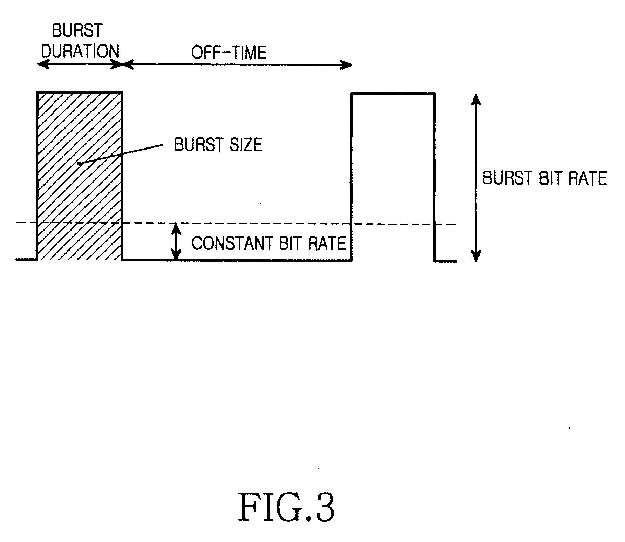

FIG 3 illustrates burst parameters.

A burst bit rate is determined according to a burst duration (i.e. on-time) and a burst size. The receiver stays inactive or scans other services or frequencies during the remaining time of period except for the burst duration, i.e. during off-time. As described before, if a constant lower bit rate is required by the receiver, this may be provided by buffering the received bursts.

During on-time (i.e. burst duration for while a burst of an interested service is transmitted), transport packets of other ESs may also be transmitted. This occurs when the burst bit rate is less than the bit rate of the transport stream (i.e. the burst uses only a part of the bit rate available on the transport stream).

In this case, the transport packets of the time-sliced and non-time-sliced ESs are multiplexed together on a packet-by-packet basis. This ensures that traditional DVB-T receivers, which receive non-time-sliced services, are not locked out from reception during a time-sliced burst.

The time slicing method used in the DVB-T system has problems. To search for a desired service, all previous services must be scanned. During the service search, power must be kept on, thereby increasing power consumption. Especially, when the terminal receives another service, the terminal has to search for all previous services in a power on status until the terminal finds the burst of another service, thereby increasing power consumption. Also, when a terminal moves from an old cell into a handover region between neighbor cells, the terminal searches the neighbor cells during off-time until an appropriate service is located.

The position of a service burst affects a search result in the time slicing scheme. For example, if the reception quality of a current service decreases in a serving cell, the terminal searches a first neighbor cell during the first off-time but fails because the position of the intended service is identical in both cells. Therefore, the terminal must listen to a second neighbor cell.

When the user selects one service, the terminal can find the start time of the service referring to an Electronic Service Guide (ESG) or an Electronic Program Guide (EPG) but cannot get an accurate burst time. Therefore, to receive an intended service in time slicing, the terminal must search until it reaches a first burst of the service.

As described above, the time slicing scheme used in the DVB-T system and DVB-H system based on the DVB-T has drawbacks in power consumption and handover.

## SUMMARY OF THE INVENTION

An object of the present invention is to substantially solve at least the above problems and/or disadvantages and to provide at least the advantages below. Accordingly, the present invention provides an apparatus and method for transmitting and receiving broadcasting data in a digital multimedia broadcasting system, in order to reduce power consumption and provide smooth and seamless handover.

According to one aspect of the present invention, in a method of transmitting broadcasting data in a DMB system, a frame group is constructed, which includes one frame group header and at least one signal frame including broadcasting data of a service. The frame group header includes service burst information about services included in at least one following frame group and a first parameter indicating the relative start time of each of the services. The frame group is transmitted in a broadcasting signal.

According to another aspect of the present invention, in a method of receiving broadcasting data in a DMB system, a frame group including one frame group header and at least one signal frame including broadcasting data of a service. The frame group header includes service burst information about services included in at least one following frame group and a first parameter indicating the relative start time of each of the services. The relative start time and burst duration of a desired service among the services are calculated using the first parameter and additional information. At least one signal frame associated with the desired service is received during the burst duration starting from a start time corresponding to the relative start time.

According to a further aspect of the present invention, in an apparatus for transmitting broadcasting data in a DMB system, a data processor generates at least one signal frame including broadcasting data of a service. A frame generator constructs a frame group including one frame group header and the at least one signal frame. The frame group header includes service burst information about services included in at least one following frame group and a first parameter indicating the relative start time of each of the services. An RF (Radio Frequency) unit transmits the frame group in a broadcasting signal.

According to still another aspect of the present invention, in an apparatus for receiving broadcasting data in a DMB system, an RF unit receives a broadcasting signal. A data processor demodulates and decodes the broadcasting signal. A frame slicer analyzes a frame group included in the decoded signal and separates one frame group header and at least one signal frame including broadcasting data of a service from the frame group. The frame group header includes service burst information about services included in at least one following frame group and a first parameter indicating the relative start time of each of the services. The frame slicer calculates the relative start time and burst duration of a desired service among the services using the first parameter and additional information. The RF unit and the data processor receive at least one signal frame associated with the desired service during the burst duration starting from a start time corresponding to the relative start time.

**BRIEF DESCRIPTION OF THE DRAWINGS**

The above and other objects, features and advantages of the present invention will become more apparent from the following detailed description when taken in conjunction with the accompanying drawings in which:

FIG 1 illustrates time slicing;
FIG 2 illustrates MPE section headers each containing ∆t indicating the time to the beginning of the next burst;
FIG 3 illustrates burst parameters;
FIG 4 illustrates a typical DMB-H frame structure;
FIG 5 is a flowchart illustrating an operation for determining the start time of an intended service using ∆t parameters according to the present invention;
FIG 6 illustrates an example of ∆t parameters according to the present invention;
FIG 7 illustrates a frame group using frame slicing;
FIG 8 illustrates frame slicing according to a first embodiment of the present invention;
FIG 9 is a flowchart illustrating an operation for receiving an intended service in a terminal according to the first embodiment of the present invention;
FIG 10 illustrates frame slicing according to a second embodiment of the present invention;
FIG 11 is a flowchart illustrating an operation for receiving an intended service in the terminal according to the second embodiment of the present invention;
FIG 12 illustrates frame slicing according to a third embodiment of the present invention;
FIG 13 is a flowchart illustrating an operation for receiving an intended service in the terminal according to the third embodiment of the present invention;
FIG 14 is a block diagram of a transmitter according to the present invention;
FIG 15 is a block diagram of a portable terminal according to the present invention;
FIG 16 illustrates a service burst information search by frame slicing according to the first embodiment of the present invention;
FIG 17 illustrates a service burst information search by frame slicing according to the second and third embodiments of the present invention;
FIG 18 illustrates an exemplary service switching by frame slicing according to the first embodiment of the present invention;
FIG 19 illustrates an exemplary service switching by frame slicing according to the second and third embodiments of the present invention, when an intended service is within n frame groups; and
FIG 20 illustrates an exemplary service switching by frame slicing according to the second and third embodiments of the present invention, when an intended service is not within n frame groups.

**DETAILED DESCRIPTION OF THE PREFERRED EMBODIMENTS**

Preferred embodiments of the present invention will be described herein below with reference to the accompanying drawings. In the following description, well-known functions or constructions are not described in detail since they would obscure the invention in unnecessary detail.

A DMB-H system according to the present invention provides another TDM scheme, frame slicing based on a DMB-T structure. The concept of frame slicing is used to not only to send data in bursts at a significantly higher rate than a bit rate required if the data was transmitted continuously, but also to use a frame group header to carry information associated with services (i.e. parameters with which to calculate the start times of the services). A signal frame containing broadcasting data of a service may provide at least one parameter with which to calculate $\Delta t$.

$\Delta t$ is the time from the start of one burst, currently being received, to the start of the next burst within a service, and is referred to as a relative start time. Each burst (or service burst) is comprised of one or more signal frames. If information about the time is directly included in each frame group header or each signal frame, a large amount of bits are required. Therefore, parameters which are used to calculate the start time of a service, and included parameters indicating the number of frame groups from a current frame group with a current burst to a frame group with the next burst, the Signal Frame Number (SFN) of a signal frame with the next burst, and the SFN of a current signal frame with the current burst in the service. A receiver analyzes a frame group header and/or signal frame including the parameters and calculates the start time of the intended service and/or $\Delta t$ using the parameters.

In this way, the receiver acquires the relative start time $\Delta t$ from the start of one burst to the start of the next burst within a service. Therefore, power consumption can be reduced and smooth and a seamless service handover can be provided. The relative start time means the time between a current signal frame or a current frame group header and the start of the next burst within the service.

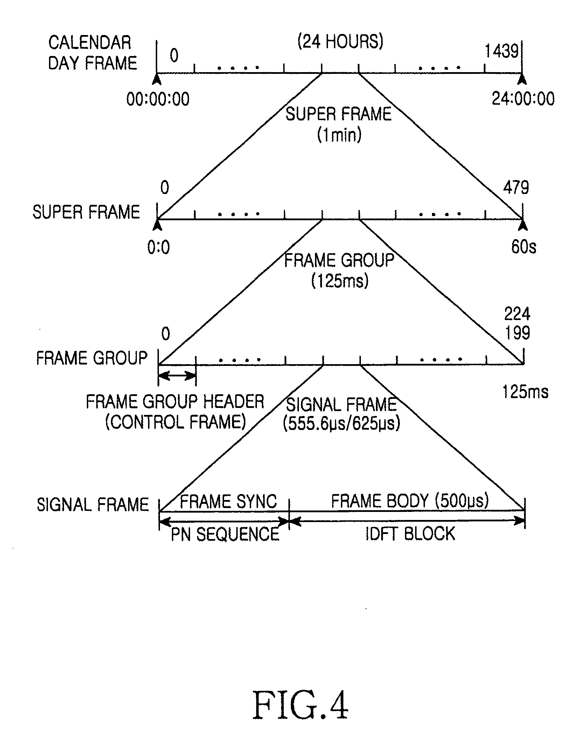

FIG 4 illustrates the structure of a DMB-H frame according to the present invention.

Referring to FIG 4, a signal frame includes a Guard Interval (GI) for a frame sync and a frame body containing an Inverse Discrete Fourier Transform (IDFT) block. A Pseudo Noise (PN) sequence resides in the GI and the GI size is a fourth or a ninth the size of the IDFT block. The PN sequence in the GI is modulated with Binary Phase Shift Keying (BPSK), for robust frame synchronization.

The duration of a frame group is 125ms, and thus eight frame groups exist in one second. Each signal frame in a frame group has a unique signal frame number (SFN), and frame synchronization is acquired by encoding the PN sequence. The first signal frame in each frame group is a frame group header, for use in control of the frame group. There are integer MPEG2 Transport Stream (TS) packs in the frame group.

A super frame is comprised of 480 frame groups, which lasts 60 seconds. Each super frame has a unique super frame number, and the super frame is encoded in the frame groups on a signal frame-by-signal frame basis.

A calendar day frame includes 1440 super frames and is periodically repeated on a natural day basis. At a selected time, the physical channel frame structure may be reset and a new calendar day frame starts.

To overcome problems associated with power consumption and handover encountered with the provisioning of an intended service, information about the start time of each signal frame and $\Delta t$ can be added to each frame group header and/or each signal frame. Direct provisioning of the information takes a large amount of bits.

Therefore, parameters of less number of bits, from which the start time and/or $\Delta t$ of a service burst information are calculated with, are provided in a frame group header and/or signal frame.

Either time slicing or frame slicing, a terminal needs to know the relative start time and duration of the next burst.

Real-time direct indication of the relative start time and the burst duration requires a large number of bits. For example, if the maximum value of $\Delta t$ is 1 second (i.e. 1000000$\mu$s), the burst duration reaches up to 62.4ms (62500$\mu$s). Then an off-time is expressed in 20 bits and the burst duration is expressed in 16 bits.

The structure of the signal frame is defined in Table 1 below.

Table 1

| Number of symbols per IDFT block | Ratio of GI to IDFT | Number of symbols per signal frame | Mode index (j) | Duration of signal frame ($\mu$s) |
|---|---|---|---|---|
| 3780 | 1/4 | 4725 | 1 | 625 |
| | 1/9 | 4200 | 2 | 555.6 |

In Table 1, for a GI ratio of 1/4, mode 1 is set (j=1) and duration $_j$ is 626$\mu$s, and for a GI ratio of 1/9, mode 2 is set (j=2) and duration $_j$ is 555.6$\mu$s.

In accordance with the present invention, it is said that the next burst starts in an $(n_{next\_SFN})^{th}$ signal frame of the next $(n_{next\_frame\_group})^{th}$ frame group. Using these two parameters, $\Delta t$ is calculated by Equation (1):

$$delta - T(\Delta t) = 125 \times n_{next\_frame\_group} + \left( n_{next\_SFN} - n_{current\_SFN} \right) \times duration_j \, [ms]$$

$$..... (1)$$

where $n_{current\_SFN}$ denotes the SFN of a currently receiving signal frame and j denotes a mode index, 1 or 2. A burst duration is expressed as the number of signal frames, amount$_{signal\_frame}$, defined by Equation (2):

$$burst\_duration = duration_j \times amount_{siganl\_frame} \, [\mu s]$$

$$..... (2)$$

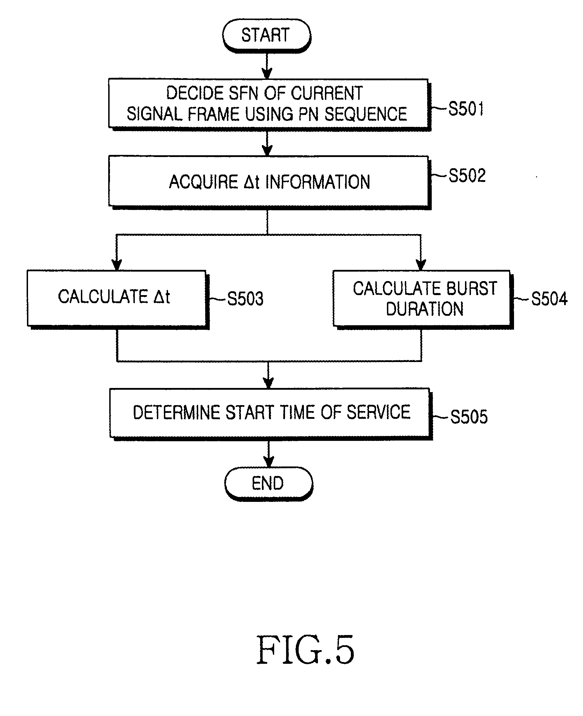

FIG 5 is a flowchart illustrating an operation for determining the start time of an intended service using $\Delta t$ parameters according to the present invention.

Referring to FIG 5, the receiver determines the SFN of a current signal frame using a predetermined PN sequence in step S501. Since each signal frame shall have a different PN sequence in a GI, the receiver determines the SFN of the current signal frame by detecting the PN sequence of the signal frame.

In step S502, the receiver detects $\Delta t$ information included in the signal frame. $\Delta t$ information, which are parameters to calculate $\Delta t$ and a burst duration, may be provided as data or control information.

According to the present invention, these parameters are $n_{next\_frame\_group}$, $n_{next\_SFN}$, and amount$_{signal\_frame}$ described in Equation (1) and Equation (2). $\Delta t$ can be calculated in any other formula and thus other parameters may be sent.

Meanwhile, one signal frame delivers a total of 36 Transport Parameter Signaling (TPS) bits. A TPS contains control information and a ratio of a GI to an IDFT block. The duration$_j$ of a signal frame in a frame group is calculated with the GI ratio. In step S504, the terminal calculates a burst duration using duration$_j$ and amount$_{siganl\_frame}$ by Equation (2).

The receiver calculates $\Delta t$ using the parameters indicating the number of frame groups to the next frame group including the intended service, $n_{next\_frame\_group}$ and the number of signal frames to a signal frame including the intended service in the next frame group, $n_{next\_SFN}$, and duration$_j$ by Equation (1) in step S503.

In step S505, the receiver determines the start time of the intended service based on $\Delta t$. The receiver may also determine an off-time at the same time. The intended service starts $\Delta t$ after the start time of the current signal frame, and the off-time is the time from the end of the current signal frame to the start of the next service burst of the intended service.

Thus, the terminal may stay inactive during the off-time until the next burst according to $\Delta t$ and the burst duration. The next burst lasts for the burst duration.

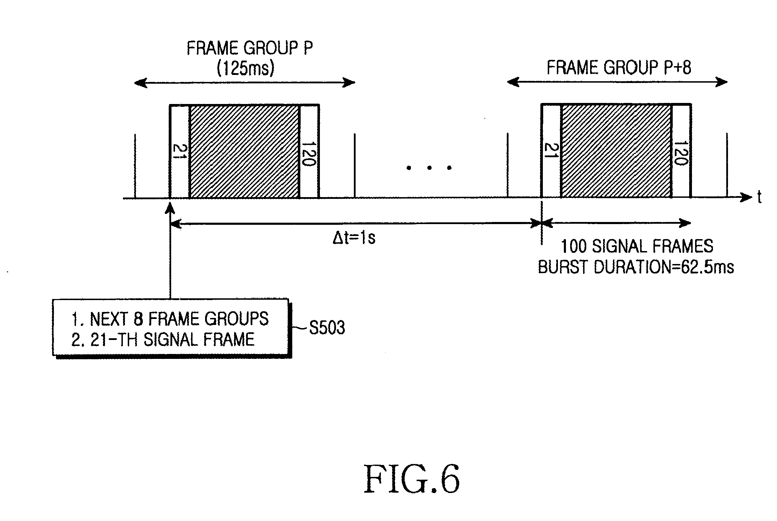

FIG 6 illustrates an example of $\Delta t$ parameters according to the present invention.

Referring to FIG 6, a frame group P lasts 125ms and 8 frame groups later, there is a frame group (P+8).

A service burst is sent in a 21th signal frame in the frame group P, and the next service burst starts in a 21th signal frame of the next eighth frame group ($n_{next\_frame\_group}$=8) and lasts 100 signal frames (amount$_{signal\_frame}$=100). According to duration$_j$ (625 $\mu$s herein), $\Delta t$ and the burst duration are given as, $\Delta t$=125x8+(21-21 )x0.625ms=1s, and burst duration=625$\mu$sx100 =62.5ms.

Let a maximum off-time estimate be denoted by offtime$_{max}$, the number of bits of $n_{next\_frame\_group}$, bit$_{next\_frame\_group}$ is calculated by Equation (3):

$$bit_{next\_frame\_group} = \left\lceil \sqrt{\frac{offtime_{max}}{125}} + 1 \right\rceil$$

$$..... (3)$$

where ⌈ ⌉ denotes a function of obtaining the largest positive integer closest to the input.

The number of bits required for $n_{next\_SFN}$, $bit_{next\_SFN}$ is given as Equation (4):

$$bit_{next\_SFN} = \left\lceil \sqrt{\frac{125}{duration_j} + 1} \right\rceil, \quad (j = 1,2)$$

$$\dots \dots (4)$$

As a consequence, a total of $bit_{\Delta t}$ bits are required to express the $\Delta t$ parameters as shown in Equation (5):

$$bit_{\Delta t} = bit_{next\_frame}group + bit_{next\_SFN}$$

$$\dots \dots (5)$$

Let a maximum burst duration estimate be denoted by $burst\_duration_{max}$. Then the number of bits in which to express the burst duration, $bit_{burst\_duration}$ is calculated by Equation (6):

$$bit_{burst\_duration} = \left\lceil \sqrt{\frac{burst\_duration_{max}}{duration_j} + 1} \right\rceil, \quad (j = 1,2)$$

$$\dots \dots (6)$$

If $offtime_{max}$ is 1 s, $bit_{next\_frame\_group}$ is 4, $bit_{next\_SFN}$ is 8, and $bit_{\Delta t}$ is 12. If $burst\_duration_{max}$ is 62.5ms, $bit_{burst\_duration}$ is 7.

Table 2 below presents a comparison between the $\Delta t$ calculation method using parameters in DMB-H according to the present invention and the conventional $\Delta t$ calculation method in DVB-H.

Table 2

|  | Number of bits to express $\Delta t$ ($bit_{\Delta t}$) ($offtime_{max}$= 1s) | Number of bits to express burst duration ($bit_{burst\_duration}$) ($burst\_duration_{max}$= 62.5ms) |
|---|---|---|
| DMB-H | 12 | 7 |
| DVB-H | 20 | 16 |
| Decrease rate | 40 | 56.25 |

As noted from Table 2, the present invention is more efficient than the conventional technology.

Besides a signal frame, information about the relative start time of each service with respect to a frame group header can be provided by the frame group header. The relative start time information is not provided explicitly and instead, parameters from which to calculate the relative start time are provided.

How the start time of each burst is calculated using parameters set in a frame group header will be described below. The frame group header includes parameters used to calculate the start time of each service. In this case, the relative start time of a service in a frame group with respect to a frame group header of the frame group is calculated by Equation (7):

$$\Delta t_{header\_service} = n_{SFN} * duration_j [ms], \quad (j=1,2)$$

$$. . . . . (7)$$

which implies that a service burst starts in an $n_{SFN}$th signal frame from the frame group header. The relative time between two services, for example, service B and service C is given as Equation (8):

$$\Delta t_{serviceB\_serviceC} = (l-i) * duration_j [ms], \quad (j=1,2)$$

$$. . . . (8)$$

where i and 1 denote the SFNs of service B and service C, i.e. $n_{SFN}$, respectively (i, 1=1,...,224).

Therefore, in the case depicted by Table 3, a burst duration is computed by Equation (9).

Table 3

| Service | SFN of signal frame with first burst for service ($n_{SFN}$) |
|---------|-------------------------------------------------------------|
| A | l |
| B | i |
| C | l |
| ... | ... |

The duration of service B, for example, is determined by Equation (9):

$$burst\_duration_{serviceB} = (l-i) * duration_j [ms], \quad (j=1,2)$$

$$. . . . . (9)$$

When a particular frame group header provides information indicating signal frame in which services start in the next N frame groups, the relative start time of a desired service, for example, service B is determined from the frame group header by Equation (10):

$$\Delta t_{service\_service} = (h-k)*125 + (l-i)*duration_j [ms]$$

$$. . . . . (10)$$

where h and k are frame group numbers defined in Table 4 below. Table 4 lists services in frame groups, to which Equation (10) is applied.

Table 4

| Relative position of each frame group among N frame groups | signal frame | SFN of signal frame in which service starts ($n_{SFN}$) |
|---|---|---|
| l | Frame group header l | 0 |
| | A | l |
| | B | q |
| | ... | |
| ... | | |
| k | Frame group header k | 0 |
| | A | l |
| | B | i |
| | ... | |
| ... | | |
| h | Frame group 0 header h | |
| | A | l |
| | B | l |
| ... | ... | |
| n | Frame group header N | 0 |
| | A | l |
| | B | d |
| | ... | |
| | | |

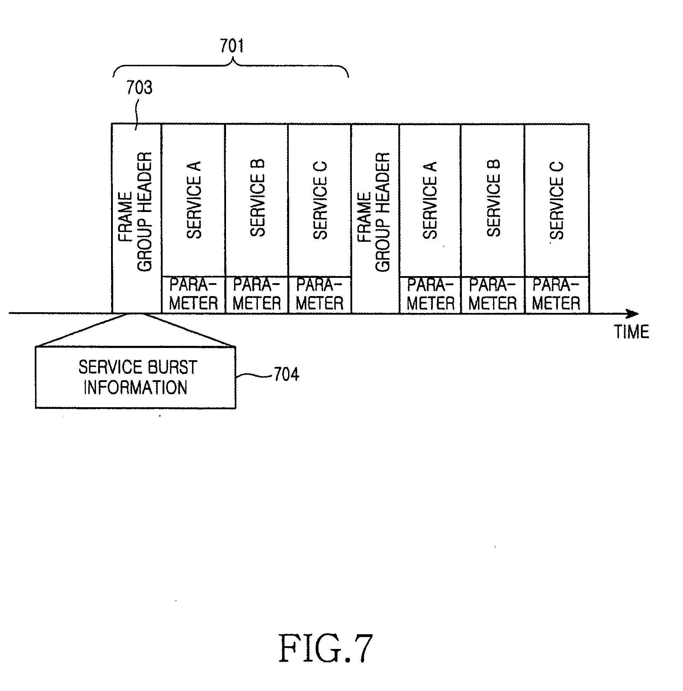

FIG 7 illustrates a frame group using frame slicing.

In frame slicing, the service burst information of services included in a frame group is carried in its frame group header. Referring to FIG 7, each frame group header 703 delivers the service burst information 704 of service A, service B, and service C included in a frame group 701 (frame group 1) to a terminal. Meanwhile, an frame slicing signaling indication indicating whether frame slicing is used can be signaled to the terminal by additional signaling. There are 36 TPS bits in every signal frame and one bit of the 36 TPS bits can be allocated to the frame slicing indication.

Three embodiments of frame slicing are provided herein.

Embodiment 1

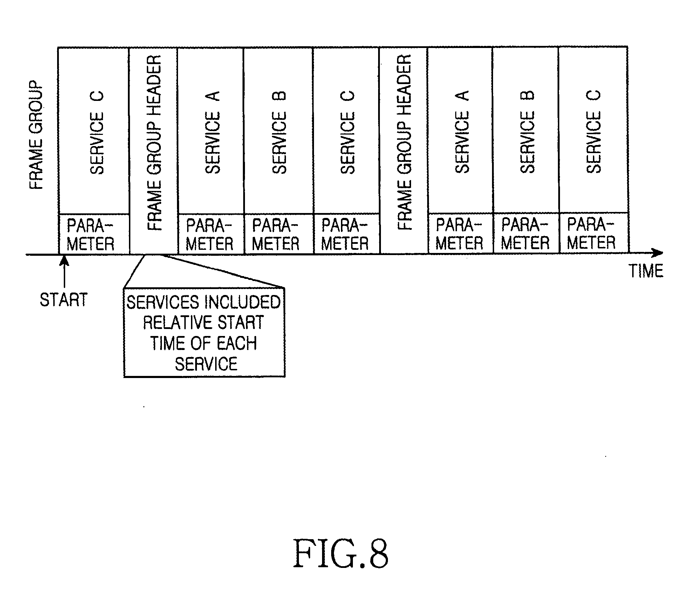

FIG 8 illustrates frame slicing according to an embodiment of the present invention.

Referring to FIG 8, a frame group includes one frame group header and a plurality of signal frames, each signal frame carrying a broadcast data of an allocated service.

Each signal frame contains parameters with which to calculate the relative start time ($\Delta t$) to the beginning of the next burst of a service, i.e. $n_{next\_frame\_group}$, $n_{next\_SFN}$, and $amount_{signal\_frame}$. Each frame group header includes service burst information indicating services included in the following frame group. Each frame group further includes a parameter with which to calculate the relative time to the beginning of each service, $n_{SFN}$.

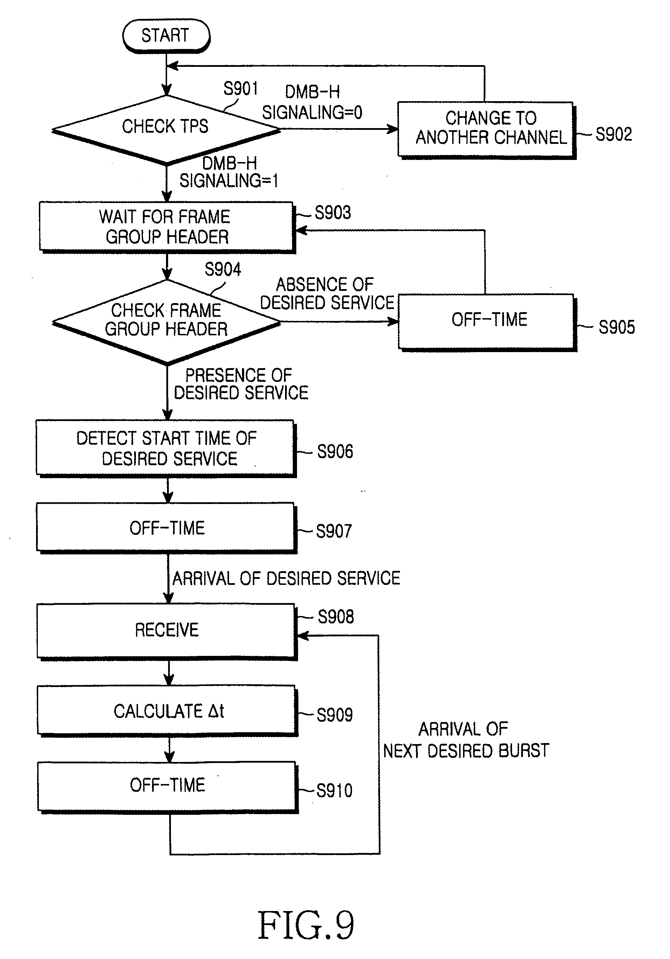

FIG 9 is a flowchart illustrating an operation for receiving an intended service in a terminal according to the present invention. With reference to FIG 9, the service reception operation in the terminal in the DMB-H system using frame slicing will be described. While a TPS check is described in detail in the flowchart, the TPS check step may not be provided by user selection.

Referring to FIG 9, when starting service reception, the terminal checks a TPS in step S901. If the TPS check indicates that DMB-H frame slicing signaling indication is set to "0" (false), the terminal changes to another channel in step S902.

If the DMB-H frame slicing signaling indication is set to "1" (true), the terminal awaits reception of a frame group header in step S903. Since the TPS indicates a ratio of a GI to an IDFT block, the terminal acquires the GI ratio from the TPS and calculates the duration of a signal frame, duration$_j$ in one frame group using the GI ratio. Duration$_j$ is used in calculating a burst duration, burst_duration.

Upon receipt of the frame group header, the terminal checks the frame group header in step S904. If there is no desired service indicated in the frame group header, the terminal turns off its receiver (off-time) in step S905. Then the terminal awaits reception of the frame group header of a frame group including the desired service in step S903 and checks a received frame group header in step S904.

On the other hand, in the presence of the desired service in the frame group header in step S904, the terminal acquires parameters from which the start time of the desired service is known, and calculates the relative start time and burst duration of at least one signal frame including the desired service in step S906 and stays off until the start time of the desired service starts in step S907.

In step S908, the terminal turns on the receiver at the start time of the desired service and receives the signal frame of the service during the calculated burst duration. In step S909, the terminal checks $\Delta t$ parameters included in the signal frame, and calculates $\Delta t$ using the $\Delta t$ parameters. If the $\Delta t$ parameters are $n_{next\_frame\_group}$, $n_{next\_SFN}$, and amount$_{signal\_frame}$, $\Delta t$ and the burst duration are calculated by Equations (1) and (2).

In step S910, the terminal stays inactive until the start time of the next burst of the desired service, and then returns to step S908 to receive the service.

For handoff, the terminal may search for frame group headers from other cells during off-time in steps S905, S907 and S910.

If the terminal desires to receive another service, the terminal monitors frame group headers until receiving a frame group including the changed desired service.

In accordance with the first embodiment of the present invention, the transmitter includes parameters (e.g. $n_{SFN}$) with which to calculate the relative start time of each service provided by a frame group in its frame group header, and At parameters (e.g. $n_{next\_frame\_group}$, $n_{next\_SFN}$, and amount$_{signal\_frame}$) with which to calculate $\Delta t$. Therefore, the terminal need not to stay active before a desired service starts.

Embodiment 2

A frame group header carries service burst information about the following N frame groups, so that there is no need for receiving every frame group header to find a desired service in the terminal.

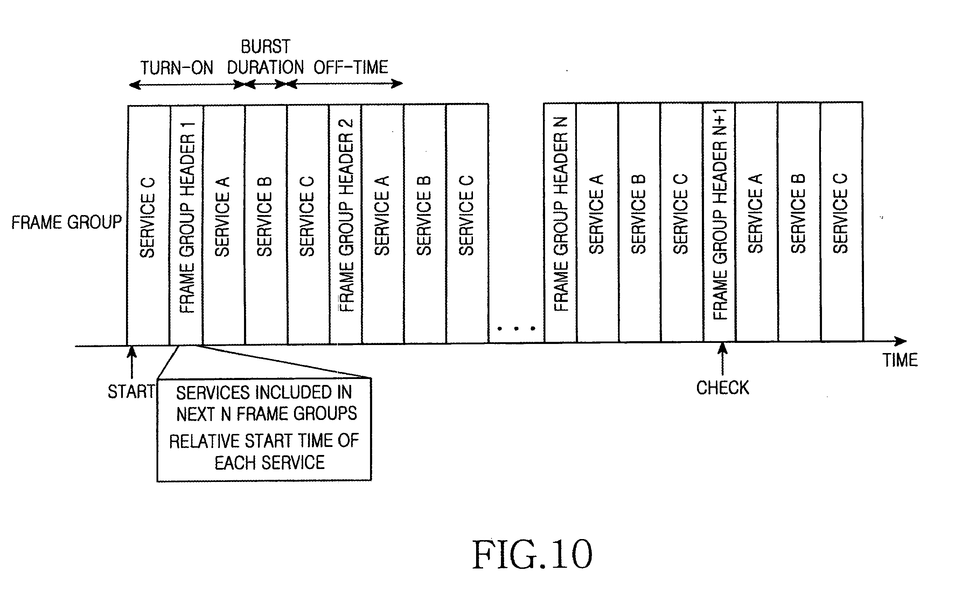

FIG 10 illustrates frame slicing according to another embodiment of the present invention.

Referring to FIG 10, each frame group includes a frame group header and a plurality of signal frames, each signal frame having a broadcast data from a service allocated to the signal frame. Frame group header 1 includes parameters with which to calculate the start time of each service included in its frame group, along with service burst information identifying services included in the next N frame groups. Each signal frame includes parameters with which to calculate the start time of its service, for example, $n_{next\_frame\_group}$, $n_{next\_SFN}$, and amount$_{signal\_frame}$.

In the illustrated case of FIG 10, the terminal turns on its receiver at the start time of service C and intends to receive service B. The terminal receives frame group header 1 after the service C and acquires service burst information about N frame groups and parameters for calculating the start time of each service from frame group header 1. The terminal then receives a signal frame with service B by staying active only for each burst duration of the service B indicated by the service burst information and the parameters. The terminal is then activated at each start time of service B and receives signal frames of the service B, while staying inactive during the remaining periods.

When frame group header (N+1) arrives, the terminal turns on its receiver and acquires service burst information about another N frame groups and parameters with which to calculate the start time of each service from frame group header (N+1), and then receives the next service B burst by staying active only for each burst duration of service B.

In this way, the terminal stays active only for the transmission period of every $N^{th}$ frame group header and the burst durations of the desired service, while staying inactive for the remaining periods. Therefore, power is saved.

In accordance with the second embodiment of the present invention, the terminal stays inactive until the beginning of a desired service burst, after checking a frame group header. However, if the time to the beginning of the first burst of the service is too short after checking the frame group header, the terminal may stay active.

Compared to the first embodiment of the present invention, no $\Delta t$ parameters are indicated within a signal frame. A frame group header carries service burst information about N frame groups and parameters with which to calculate the relative start time of each service are included in the N frame groups. Therefore, the terminal checks a frame group header every N frame groups.

Let the maximum off-time be denoted by $Ot_{max}$, an optimal N value is given as Equation (11):

$$N = \left\lceil \frac{Ot_{max}}{125ms} \right\rceil$$

$$. . . . . (11)$$

where ⌈ ⌉ denotes rounded to the next higher positive integer. Yet, a trade-off may be needed between N and the size of the service burst information depending on the size of the service burst information in the frame group header.

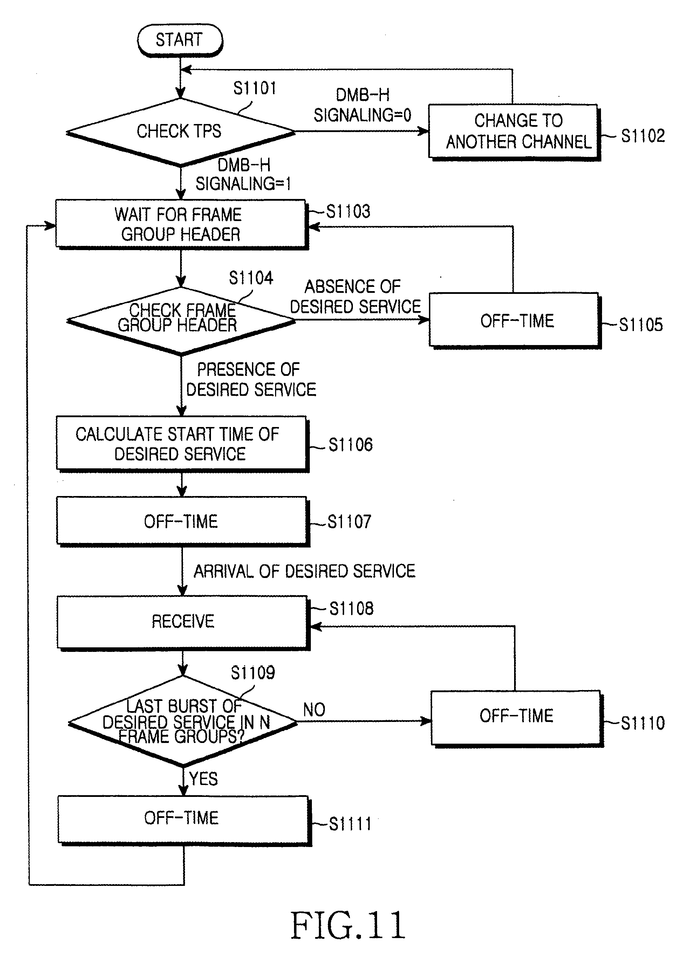

FIG 11 is a flowchart illustrating an operation for receiving an intended service in the terminal according to the second embodiment of the present invention. A service reception operation in the terminal in the DMB-H system using frame slicing will be described with reference to FIG 11. While a TPS check is described in detail in the flowchart, the TPS check step may not be provided by user selection.

Referring to FIG 11, when starting service reception, the terminal performs a TPS check in step S1101. If the TPS check indicates that DMB-H frame slicing signaling indication is set to "0", the terminal changes to another channel in step S 1102.

If the DMB-H frame slicing signaling indication is set to "1", the terminal awaits reception of a frame group header in step S1103. Since the TPS indicates a ratio of a GI to an IDFT block, the terminal acquires the GI ratio from the TPS and calculates the duration of a signal frame, duration$_j$, in a frame group using the GI ratio. Duration$_j$ is used in calculating a burst duration, burst_duration.

Upon receipt of an i$^{th}$ frame group header, the terminal checks the i$^{th}$ frame group header in step S 1104. If the i$^{th}$ frame group header indicates the absence of a desired service in the following N frame groups, the terminal is kept off until an (i+N)$^{th}$ frame group header arrives in steps S1105 and S 1103. Upon receipt of the (i+N)$^{th}$ frame group header, the terminal checks the (i+N)$^{th}$ frame group header in step S 1104.

On the other hand, if the desired service exists in the following N frame groups, the terminal detects parameters from which the relative start time of a signal frame of the desired service can be derived in the i$^{th}$ frame group header, and calculates the relative start time and burst duration of at least one signal frame including the desired service in step S 1106

The terminal then is kept off until the desired service starts in step S 1107. At the start time of the desired service, the terminal turns on its receiver and receives signal frames of the service during the burst duration in step S 1108.

The terminal then determines whether the received signal frame is the last one of the desired service in the N frame groups in step S1109. If it is not the last signal frame, the terminal is turned off in step S1110 and returns to step S 1108. On the other hand, in the case of the last signal frame, the terminal turns off in step S1111 and when the off-time elapses, the terminal returns to step S1103 to receive the (i+N)$^{th}$ frame group header.

In accordance with the second embodiment of the present invention, the transmitter includes service burst information about the following N frame groups in every N$^{th}$ frame group header, which obviates the need for monitoring each frame group header to search for a start time of a desired service.

Embodiment 3

Each frame group header includes service burst information about the following N frame groups and parameters with which to calculate the relative start time of each service included in the N frame groups. In addition, $\Delta t$ parameters are included within each signal frame. Therefore, the terminal receives a desired service without monitoring each frame group header since it calculates the relative start time of each service using the service burst information and parameters set in a frame group header and using the $\Delta t$ parameters set in each signal frame.

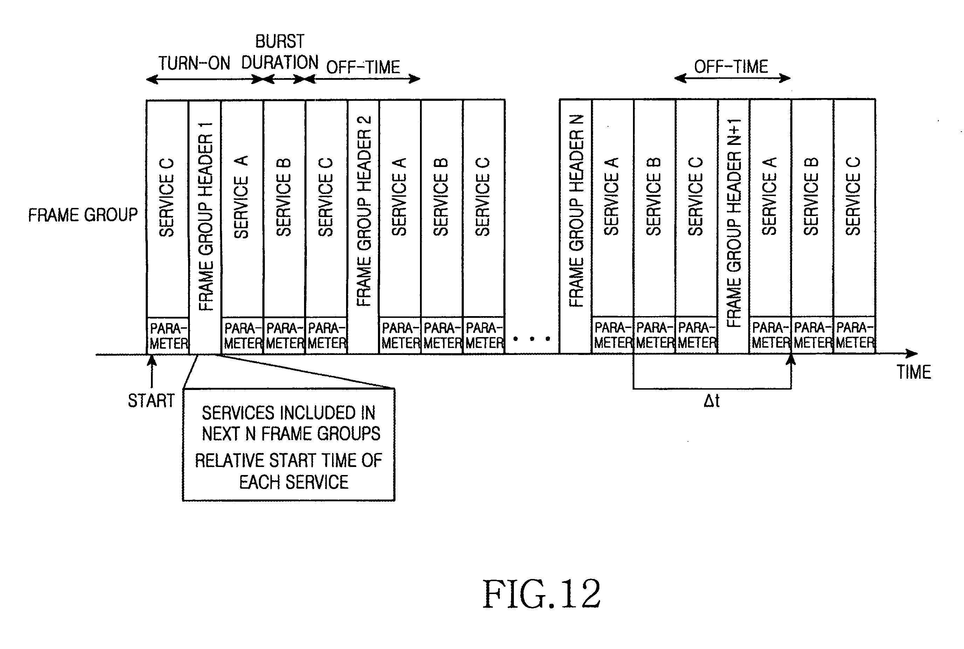

FIG 12 illustrates frame slicing according to a third embodiment of the present invention.

Referring to FIG 12, each frame group includes a frame group header and a plurality of signal frames, each signal frame having a broadcast data from a service allocated to the signal frame. The terminal receives frame group header 1 and acquires parameters with which to calculate the start time of each service, along with service burst information identifying services included in the next N frame groups. The terminal turns on its receiver and receives a signal frame with service B during a burst duration according to the service burst information and the parameters. At each start time of service B, the terminal is activated and receives signal frames during each burst duration, while staying inactive during the remaining off-time.

The terminal checks $\Delta t$ parameters in the last signal frame with service B among the N frame groups, and calculates $\Delta t$ using the $\Delta t$ parameters. The terminal stays inactive according to $\Delta t$ until a signal frame of service B is sent in frame groups after an N$^{th}$ frame group.

In this way, the terminal checks a frame group header and stays inactive until the start time of a desired service burst. However, if the time to the beginning of the first burst of the service is too short after checking the frame group header, the terminal may stay active.

In accordance with the third embodiment of the present invention, as with the second embodiment, a frame group header has service burst information identifying services included in the next N frame groups. As with the first embodiment, each signal frame includes Δt parameters of its service and the frame group header further includes parameters with which to calculate the start time of each service.

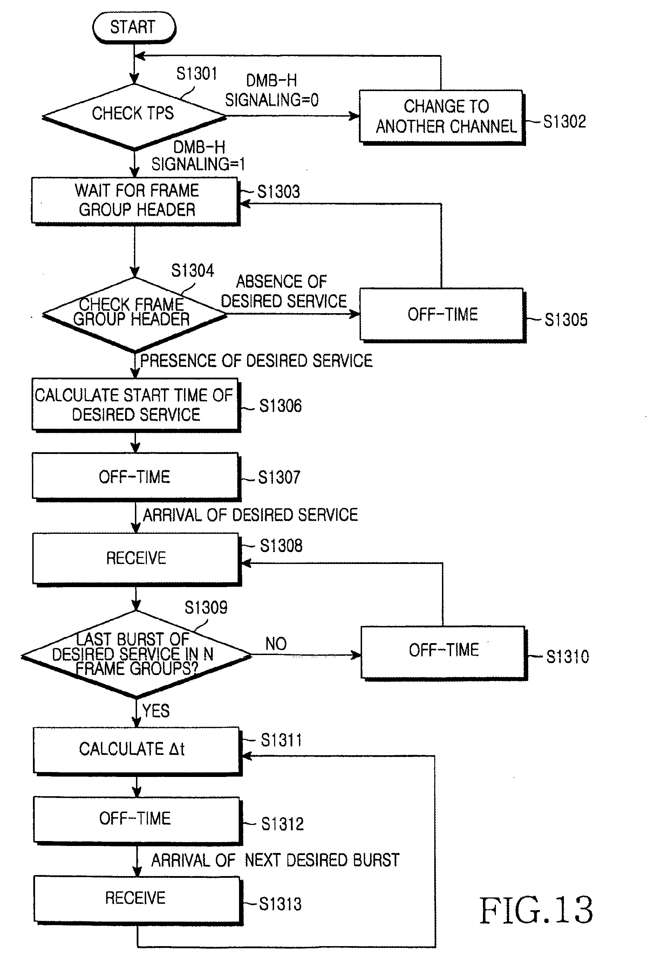

FIG 13 is a flowchart illustrating an operation for receiving an intended service in the terminal according to the third embodiment of the present invention. A service reception operation in the terminal in the DMB-H system using frame slicing will be described with reference to FIG 13. While a TPS check is described in detail in the flowchart, the TPS check step may not be provided by user selection.

Referring to FIG 13, when starting service reception, the terminal performs a TPS check in step S 1301. If the TPS check indicates that DMB-H signaling indication is set to "0", the terminal changes to another channel in step S 1302.

If the DMB-H signaling indication is set to "1", the terminal awaits the reception of a frame group header in step S1303. Since the TPS indicates a ratio of a GI to an IDFT block, the terminal acquires the GI ratio from the TPS and calculates the duration of a signal frame, duration$_j$, in a frame group using the GI ratio. Duration$_j$ is used in calculating a burst duration, burst_duration.

Upon receipt of an i$^{th}$ frame group header, the terminal checks the i$^{th}$ frame group header in step S1304. If a desired service is not indicated by the i$^{th}$ frame group header, the terminal is kept off until an (i+N)$^{th}$ frame group header arrives in step S 1305 and checks the (i+N)$^{th}$ frame group header in steps S 1303 and S 1304.

On the other hand, if the desired service is indicated by the i$^{th}$ frame group header in step S1304, the terminal detects parameters with which to calculate the start time of the desired service in the i$^{th}$ frame group header and calculates the relative start time and burst duration of at least one signal frame including the desired service in step S1306.

The terminal is kept off until the desired service starts in step S 1307. At the start time of the desired service, the terminal receives signal frames of the service in step S1308.

The terminal then determines whether the received signal frame is the last burst of the desired service in the N frame groups in step S 1309. If it is not the last burst, the terminal stays inactive in step S1310 and receives a signal frame of the desired service at the next start time in step S1308.

On the other hand, in the case of the last burst, the terminal acquires Δt parameters from a signal frame with the last burst of the service and calculates Δt using the Δt parameters in step S 1311. Then the terminal stays inactive for an off-time corresponding to Δt in step S 1312.

When the off-time elapses, the terminal receives the next burst of the service in step S 1313 and returns to step S 1311.

In accordance with the third embodiment of the present invention, a frame group header includes all service burst information of N following frame groups. Therefore, the terminal can easily detect an expected service.

Furthermore, since Δt parameters are included in every signal frame, the terminal can keep receiving the service without the need for monitoring a frame group header again after detecting the service.

In the present invention described above, the receiver stays active for a fraction of time, while receiving bursts of a requested service, compared to the conventional technology. If a constant lower bit rate is required by the terminal, this may be provided by buffering the received bursts.

Now a description will be made of the structures of a transmitter and a receiver for use in the DMB-H system in accordance with the present invention.

In the DMB-H system, the transmitter encodes and modulates an input TS, time-division-multiplexes the modulated signal with a PN sequence, constructs a frame out of the multiplexed signal by frame slicing according to the present invention, and transmits the frame in the form of an RF signal.

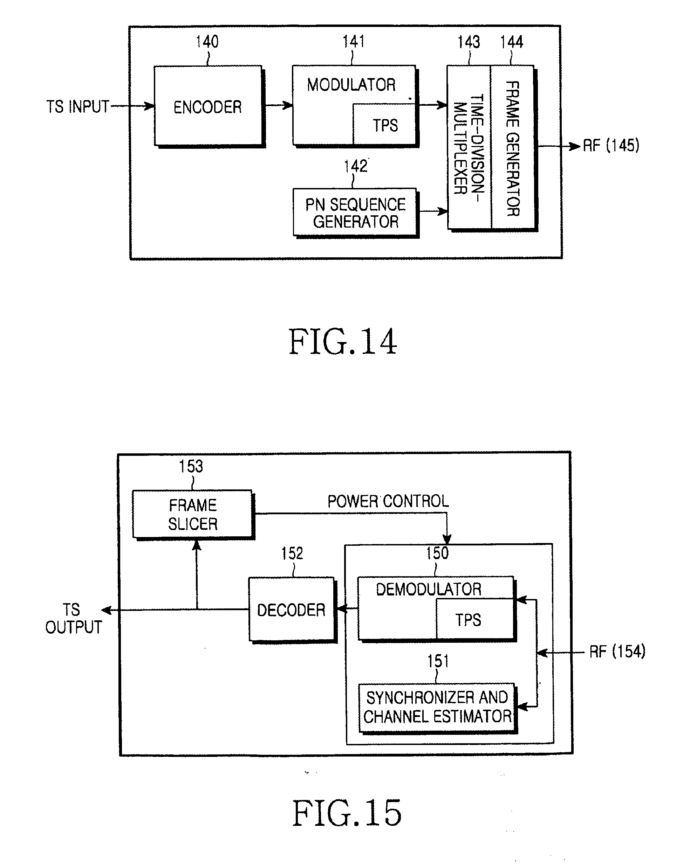

FIG 14 is a block diagram of a transmitter according to the present invention.

Referring to FIG 14, the transmitter for use in a DMB-H system includes data processors 140 to 143 for processing transmission data in a predetermined method, and a frame generator 144 for constructing a frame group out of the processed data by frame slicing, and transmitting the frame group.

Specifically, the data processors are an encoder 140 for encoding an input TS, a modulator 141 for modulating the coded signal, a PN sequence generator 142 for generating a PN sequence for frame sync, and a time-division-multiplexer 143 for time-division-multiplexing the modulated signal with the PN sequence.

The frame generator 144 constructs a frame formatted in accordance with the present invention out of the time-division-multiplexed signal. An RF unit 145 upconverts the frame signal to an RF signal and transmits the RF signal.

The encoder 140 performs FEC, outer coding, outer interleaving, inner coding, and inner interleaving, and the modulator 141 covers constellation, TPS insertion, and OFDM functionality.

The PN sequence generator 142 generates a time-domain PN sequence to be inserted into an OFDM guard interval, for synchronization and channel estimation. The time-division-multiplexer 143 combines an IDFT block with the PN sequence.

The frame generator 144 combines signal frames generated from the time-division-multiplexer 143, generates a frame group header including service burst information about the signal frames, and adds the frame group header to the combined signal frames, thereby creating a frame group including the frame group header and the signal frames. Each of the signal frames and/or the frame group header includes parameters associated with the start time of a service (or services) according to the present invention. The RF unit 145 sends the frame group in a broadcasting signal to the terminal.

FIG 15 is a block diagram of a receiver according to the present invention.

Referring to FIG 15, the receiver for use in the DMB-H system includes data processors 150, 151 and 152 for analyzing a frame group constructed in the present invention and implementing a desired service, and a frame slicer 153 for calculating the relative start time and burst duration of a desired service using parameters set in the frame group header and/or a signal frame and controlling on/off status of the data processors.

The data processors are a demodulator 150 for demodulating a baseband signal including broadcasting data received from an RF unit 154, a synchronizer and channel estimator 151 for extracting a PN sequence from the baseband signal, acquiring synchronization, and performing channel estimation using the PN sequence, and a decoder 152 for decoding the demodulated signal and outputting a TS.

The frame slicer 153 performs frame slicing using the decoded signal. The frame slicer 153 analyzes a frame group included in the decoded signal and separates a frame group header and at least one signal frame from the frame group. Then the frame slicer 153 detects necessary parameters from the frame group header and/or the signal frame, calculates the relative start time and burst duration of a desired service using the parameters, and controls the power of the demodulator 150 and the synchronizer and channel estimator 151 according to the calculation results.

Specifically, the frame slicer 153 calculates the relative start time and burst duration of a desired service according to the present invention and activates the RF unit 154 and the data processors during the burst duration from the start time of the desired service, while keeping the RF unit 154 and the data processors inactive during off-time. The activation or inactivation is equivalent to power-on/off of the devices.

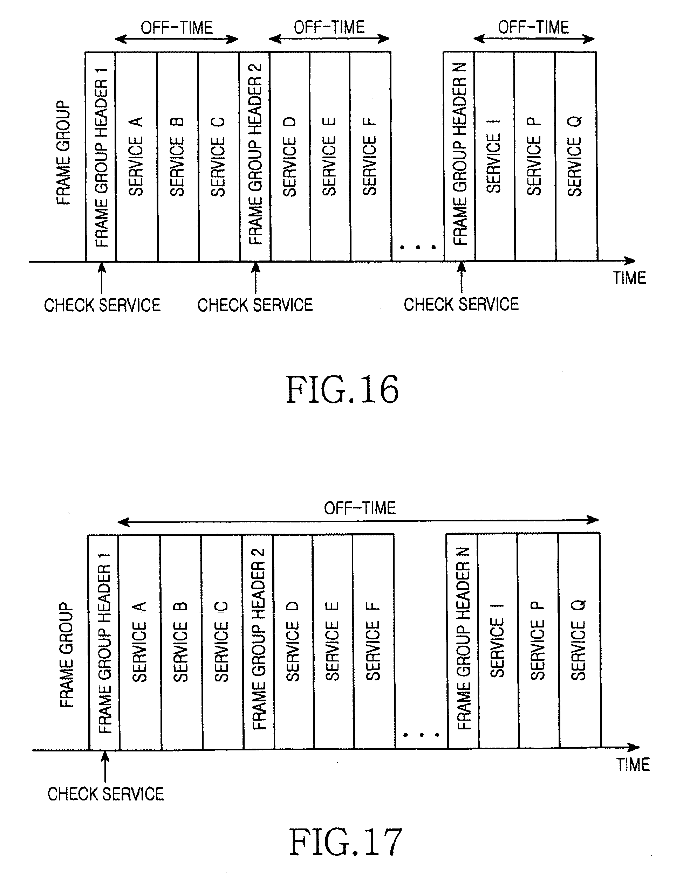

How service burst information is detected according to the present invention will be described below in detail with reference to FIGs. 16 and 17.

FIG 16 illustrates a service burst information search by frame slicing according to the first embodiment of the present invention.

In the first embodiment of the present invention, a frame group header provides information identifying services included in a frame group and parameters with which to calculate the start times of the services. Therefore, the terminal does not need to monitor the total signal frames to acquire the service burst information. That is, the terminal has only to monitor the frame group header of each frame group. If a desired service is not indicated by a frame group header, the terminal stays inactive during the remaining period.

FIG 17 illustrates a service information search by frame slicing according to the second and third embodiments of the present invention.

In the second and third embodiments of the present invention, each frame group header or a particular frame group header includes information identifying the services included in the next N frame groups and parameters with which to calculate the start times of the services. Therefore, the terminal does not need to monitor the total signal frames to acquire such information. That is, the terminal has only to monitor every $N^{th}$ frame group header. If a desired service is not found in the frame group header, the terminal stays off until the next $N^{th}$ frame group header arrives. In this way, a service search time is further reduced, compared to the first embodiment, because there is no need for monitoring every frame group header.

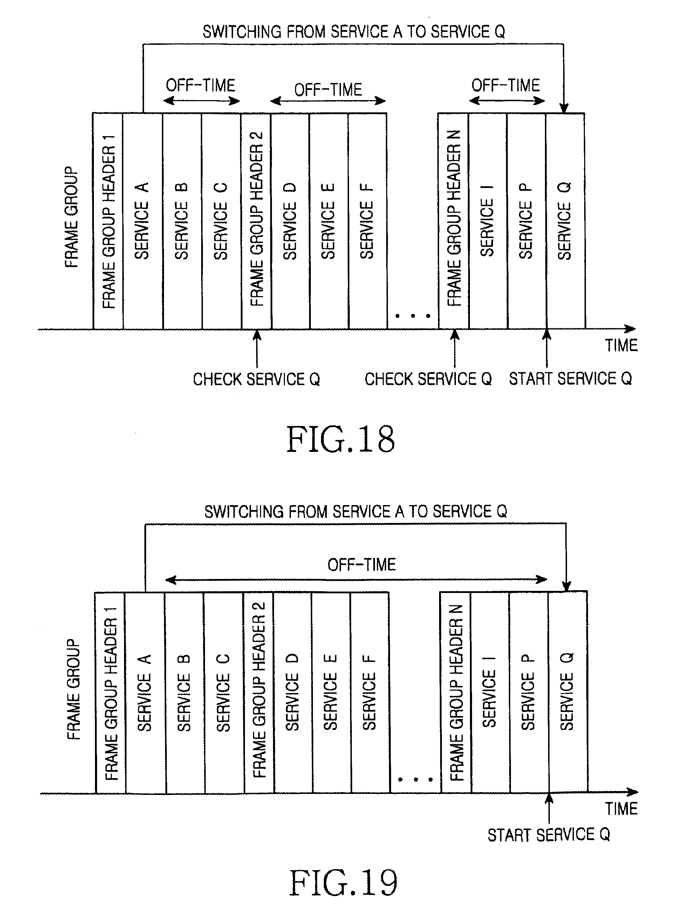

Service switching methods will be described below in detail with reference to FIGs. 18, 19 and 20.

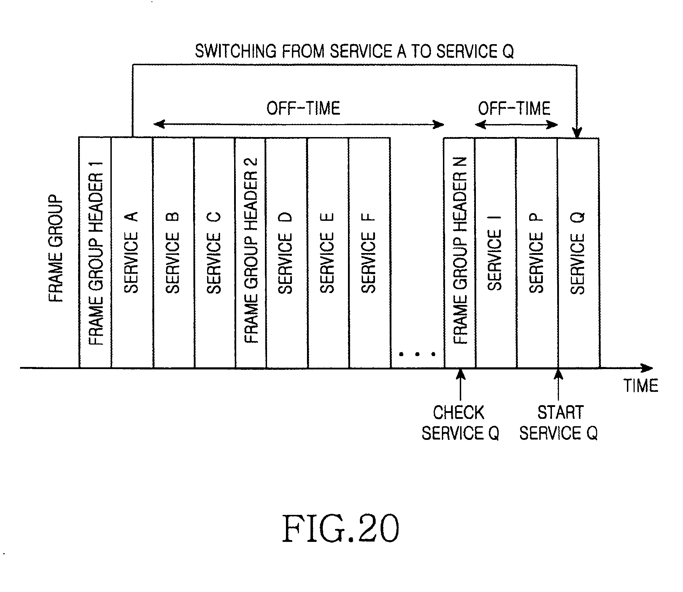

FIG 18 illustrates an exemplary service switching by frame slicing according to the first embodiment of the present invention, FIG 19 illustrates an exemplary service switching by frame slicing according to the second and third embodiments of the present invention, when an intended service is within n frame groups, and FIG 20 illustrates an exemplary service switching based on frame slicing according to the second and third embodiments of the present invention, when an intended service is not within n frame groups.

In the illustrated case of FIG 18, the terminal switches from service A to service Q. The terminal receives each frame group header and determines whether service A exists in the frame group of the frame group header. The remaining period except for the burst duration of service A and the reception periods of the frame group headers is off-time. If service Q is detected from frame group header N, the terminal calculates the relative start time and burst duration of service Q with respect to frame group header B based on a parameter set in frame group header N and receives service Q according to the relative start time and burst duration.

Referring to FIG 19, if the terminal already acquires the start time information of service Q from frame group header 1, that is, if service Q exists in the N frame groups following the frame group header, the terminal can be kept off until service Q starts after receiving service A in frame group 1.

On the other hand, if the terminal fails to acquire the start time information of service Q from frame group header 1, it is kept off until frame group header N is received after receiving service A in frame group 1. Then the terminal monitors the frame group header of every (Nxi+1)$^{th}$ frame group (i is a positive integer), as illustrated in FIG 20.

When frame slicing is used for handover, the terminal has only to monitor frame group headers from neighbor cells, compared to the time slicing scheme in which the terminal has to monitor all service bursts until detecting an appropriate service.

Although the position of a service burst affects search results in the time slicing scheme, this problem is solved by the frame slicing scheme. When other cells provide a desired service, the terminal monitors a frame group header irrespective of the time position of the desired service, and can detect the desired service in no more than one cycle.

In the frame slicing of the present invention, service burst information is delivered in a frame group header. Thus, power consumption is more effectively reduced, and smooth, seamless service handover can be provided, as demonstrated in the present invention.

As described above, in the frame slicing of the present invention , since service information is carried by a frame group header, power consumption is more effectively reduced and smooth and seamless service handover can be implemented. Therefore, the present invention has its competitive advantage in performance and cost.

While the invention has been shown and described with reference to certain preferred embodiments thereof, it will be understood by those skilled in the art that various changes in form and details may be made therein without departing from the spirit and scope of the invention as defined by the appended claims.

**Claims**

1. A method of transmitting broadcasting data in a digital multimedia broadcasting (DMB) system, comprising the steps of:

   constructing a frame group including one frame group header and at least one signal frame including broadcasting data of a service, the frame group header including service burst information about services included in at least one following frame group and a first parameter indicating the relative start time of each of the services; and transmitting the frame group in a broadcasting signal.

2. The method of claim 1, wherein when a service burst of the each service starts in an $n_{SFN}{}^{th}$ signal frame counted from the frame group header, the first parameter includes $n_{SFN}$.

3. The method of claim 2, wherein the relative start time of the each service is equal to the product of $n_{SFN}$ and a signal frame duration.

4. The method of claim 2, wherein the burst duration of the each service is equal to the product of the difference between the number of a signal frame where one burst of each service starts and the number of a signal frame where the next burst of each service starts, and the signal frame duration.

5. The method of claim 1, wherein the at least one signal frame includes a second parameter for calculating the relative start time and burst duration of the service.

6. The method of claim 5, wherein when the next service burst of the service of the at least one signal frame starts in an $n_{next\_SFN}{}^{th}$ signal frame of the next $n_{next\_frame\_group}{}^{th}$ frame group, the second parameter includes $n_{next\_SFN}$, $n_{next\_frame\_group}$, and $amount_{signal\_frame}$.

7. The method of claim 6, wherein the relative start time of the service is equal to the product of a frame group length and $n_{next\_frame\_group}$ plus the difference between $n_{next\_SFN}$ and $n_{current\_SFN}$, times the signal frame duration, $n_{current\_SFN}$ being the signal frame number (SFN) of the at least one signal frame.

8. The method of claim 6, wherein the burst duration of the service is equal to the product of the signal frame duration and $amount_{signal\_frame}$.

9. The method of claim 1, wherein the at least one signal frame includes a transmission parameter signaling (TPS) bit indicating a ratio of a guard interval to an actual data block included in the at least one signal frame, and the guard interval ratio is used to calculate the signal frame duration.

10. The method of claim 9, wherein the at least one signal frame includes a TPS bit indicating the presence of the frame group header.

11. A method of receiving broadcasting data in a digital multimedia broadcasting (DMB) system, comprising the steps of:

receiving a frame group including one frame group header and at least one signal frame including broadcasting data of a service, the frame group header including service burst information about services included in at least one following frame group and a first parameter indicating the relative start time of each of the services;
calculating the relative start time and burst duration of a desired service among the services using the first parameter and additional information; and
receiving at least one signal frame associated with the desired service during the burst duration, starting from a start time corresponding to the relative start time.

12. The method of claim 11, wherein when a service burst of the desired service starts in an $n_{SFN}^{th}$ signal frame counted from the frame group header, the first parameter includes $n_{SFN}$.

13. The method of claim 12, wherein the relative start time of the desired service is equal to the product of $n_{SFN}$ and a signal frame duration.

14. The method of claim 12, wherein the burst duration of each of the services is equal to the product of the difference between the number of a signal frame where one burst of the each service starts and the number of a signal frame where the next burst of the each service starts, and the signal frame duration.

15. The method of claim 11, wherein the at least one signal frame includes a second parameter for calculating the relative start time and burst duration of the service.

16. The method of claim 15, wherein when the next service burst of the service of the at least one signal frame starts in an $n_{next\_SFN}^{th}$ signal frame of the next $n_{next\_frame\_group}^{th}$ frame group, the second parameter includes $n_{next\_SFN}$, $n_{next\_frame\_group}$, and $amount_{signal\_frame}$.

17. The method of claim 16, wherein the relative start time of the service is equal to the product of a frame group length and $n_{next\_frame\_group}$ plus the difference between $n_{next\_SFN}$ and $n_{current\_SFN}$, times the signal frame duration, $n_{current\_SFN}$ being the signal frame number (SFN) of the at least one signal frame.

18. The method of claim 16, wherein the burst duration of the service is equal to the product of the signal frame duration and $amount_{signal\_frame}$.

19. The method of claim 11, wherein the at least one signal frame includes a transmission parameter signaling (TPS) bit indicating a ratio of a guard interval to an actual data block included in the at least one signal frame, and the guard interval ratio is used to calculated the signal frame duration.

20. The method of claim 19, wherein the at least one signal frame includes a TPS bit indicating the presence of the frame group header.

21. An apparatus for transmitting broadcasting data in a digital multimedia broadcasting (DMB) system, comprising:

a data processor for generating at least one signal frame including broadcasting data of a service;
a frame generator for constructing a frame group including one frame group header and the at least one signal frame, the frame group header including service burst information about services included in at least one following frame group and a first parameter indicating the relative start time of each of the services; and
a radio frequency (RF) unit for transmitting the frame group in a broadcasting signal.

22. The apparatus of claim 21, wherein when a service burst of the each service starts in an $n_{SFN}^{th}$ signal frame counted from the frame group header, the first parameter includes $n_{SFN}$.

23. The apparatus of claim 22, wherein the relative start time of the each service is equal to the product of $n_{SFN}$ and a signal frame duration.

24. The apparatus of claim 22, wherein the burst duration of the each service is equal to the product of the difference between the number of a signal frame where one burst of the each service starts and the number of a signal frame where the next burst of the each service starts, and the signal frame duration.

25. The apparatus of claim 21, wherein the at least one signal frame includes a second parameter for calculating the relative start time and burst duration of the service.

26. The apparatus of claim 25, wherein when the next service burst of the service of the at least one signal frame starts in an $n_{next\_SFN}$th signal frame of the next $n_{next\_frame\_group}$th frame group, the second parameter includes $n_{next\_SFN}$, $n_{next\_frame\_group}$, and $amount_{signal\_frame}$.

27. The apparatus of claim 26, wherein the relative start time of the service is equal to the product of a frame group length and $n_{next\_frame\_group}$ plus the difference between ($n_{next\_SFN}$ and $n_{current\_SFN}$, times the signal frame duration, $n_{current\_SFN}$ being the signal frame number (SFN) of the at least one signal frame.

28. The apparatus of claim 26, wherein the burst duration of the service is equal to the product of the signal frame duration and $amount_{signal\_frame}$.

29. The apparatus of claim 21, wherein the at least one signal frame includes a transmission parameter signaling (TPS) bit indicating a ratio of a guard interval to an actual data block included in the at least one signal frame, and the guard interval ratio is used to calculated the signal frame duration.

30. The apparatus of claim 29, wherein the at least one signal frame includes a TPS bit indicating the presence of the frame group header.

31. An apparatus for receiving broadcasting data in a digital multimedia broadcasting (DMB) system, comprising:

a radio frequency (RF) unit for receiving a broadcasting signal;
a data processor for demodulating and decoding the broadcasting signal; and
a frame slicer for analyzing a frame group included in the decoded signal, separating one frame group header and at least one signal frame including broadcasting data of a service from the frame group, the frame group header including service burst information about services included in at least one following frame group and a first parameter indicating the relative start time of each of the services, and calculating the relative start time and burst duration of a desired service among the services using the first parameter and additional information, wherein the RF unit and the data processor receive at least one signal frame associated with the desired service during the burst duration starting from a start time corresponding to the relative start time.

32. The apparatus of claim 31, wherein when a service burst of the desired service starts in an $n_{SFN}$th signal frame counted from the frame group header, the first parameter includes $n_{SFN}$.

33. The apparatus of claim 32, wherein the relative start time of the desired service is equal to the product of $n_{SFN}$ and a signal frame duration.

34. The apparatus of claim 32, wherein the burst duration of each of the services is equal to the product of the difference between the number of a signal frame where one burst of the each service starts and the number of a signal frame where the next burst of the each service starts, and the signal frame duration.

35. The apparatus of claim 31, wherein the at least one signal frame includes a second parameter for calculating the relative start time and burst duration of the service.

36. The apparatus of claim 35, wherein when the next service burst of the service of the at least one signal frame starts in an $n_{next\_SFN}$th signal frame of the next $n_{next\_frame\_group}$th frame group, the second parameter includes $n_{next\_SFN}$, $n_{next\_frame\_group}$, and $amount_{signal\_frame}$.

37. The apparatus of claim 36, wherein the relative start time of the service is equal to the product of a frame group length and $n_{next\_frame\_group}$ plus the difference between $n_{next\_SFN}$ and $n_{current\_SFN}$, times the signal frame duration, $n_{current\_SFN}$ being the signal frame number (SFN) of the at least one signal frame.

38. The apparatus of claim 36, wherein the burst duration of the service is equal to the product of the signal frame duration and amount$_{signal\_frame}$.

39. The apparatus of claim 31, wherein the at least one signal frame includes a transmission parameter signaling (TPS) bit indicating a ratio of a guard interval to an actual data block included in the at least one signal frame, and the guard interval ratio is used to calculated the signal frame duration.

40. The apparatus of claim 39, wherein the at least one signal frame includes a TPS bit indicating the presence of the frame group header.

SERVICE A | SERVICE B | SERVICE C | SERVICE D | SERVICE E | SERVICE A | SERVICE B | SERVICE C | SERVICE D | SERVICE E

t

FIG.1

Δt

SECTIONS

FIG.2

FIG.3

CALENDAR DAY FRAME | 0 . . . . (24 HOURS) 1439|

00:00:00                                          24:00:00

SUPER FRAME (1min)

0                                                 479

SUPER FRAME | . . . . |

0:0                                               60s

FRAME GROUP (125ms)

0                                                 224
                                                  199

FRAME GROUP | . . . . |

                                                  125ms

FRAME GROUP HEADER (CONTROL FRAME)    SIGNAL FRAME (555.6μs/625μs)

SIGNAL FRAME | FRAME SYNC | FRAME BODY (500μs) |
             PN SEQUENCE      IDFT BLOCK

FIG.4

START

DECIDE SFN OF CURRENT
SIGNAL FRAME USING PN SEQUENCE — S501

ACQUIRE Δt INFORMATION — S502

CALCULATE Δt — S503

CALCULATE BURST
DURATION — S504

DETERMINE START TIME OF SERVICE — S505

END

# FIG.5

FIG.6

EP 1 742 393 A2

FIG.7

23

FIG.8

START

CHECK TPS — S901 ———DMB-H SIGNALING=0———→ CHANGE TO ANOTHER CHANNEL — S902

│ DMB-H SIGNALING=1

WAIT FOR FRAME GROUP HEADER — S903

CHECK FRAME GROUP HEADER — S904 ———ABSENCE OF DESIRED SERVICE———→ OFF-TIME — S905

│ PRESENCE OF DESIRED SERVICE

DETECT START TIME OF DESIRED SERVICE — S906

OFF-TIME — S907

│ ARRIVAL OF DESIRED SERVICE

RECEIVE — S908

CALCULATE Δt — S909

OFF-TIME — S910

ARRIVAL OF NEXT DESIRED BURST

# FIG.9

FIG.10

FIG.11

EP 1 742 393 A2

BURST
TURN-ON DURATION OFF-TIME

OFF-TIME

FRAME GROUP

SERVICE C

FRAME GROUP HEADER 1

SERVICE A

SERVICE B

SERVICE C

FRAME GROUP HEADER 2

SERVICE A

SERVICE B

SERVICE C

FRAME GROUP HEADER N

SERVICE A

SERVICE B

SERVICE C

FRAME GROUP HEADER N+1

SERVICE A

SERVICE B

SERVICE C

PARA-METER

PARA-METER

PARA-METER

PARA-METER

PARA-METER

PARA-METER

PARA-METER

. . .

PARA-METER

PARA-METER

PARA-METER

PARA-METER

PARA-METER

PARA-METER

TIME

START

SERVICES INCLUDED IN
NEXT N FRAME GROUPS

RELATIVE START TIME OF
EACH SERVICE

$\Delta t$

FIG.12

START

CHECK TPS —S1301 —— DMB-H SIGNALING=0 →  CHANGE TO ANOTHER CHANNEL —S1302

DMB-H SIGNALING=1

WAIT FOR FRAME GROUP HEADER —S1303

CHECK FRAME GROUP HEADER —S1304 —— ABSENCE OF DESIRED SERVICE →  OFF-TIME —S1305

PRESENCE OF DESIRED SERVICE

CALCULATE START TIME OF DESIRED SERVICE —S1306

OFF-TIME —S1307

ARRIVAL OF DESIRED SERVICE

RECEIVE —S1308

LAST BURST OF DESIRED SERVICE IN N FRAME GROUPS? —S1309 —— NO →  OFF-TIME —S1310

YES

CALCULATE Δt —S1311

OFF-TIME —S1312

ARRIVAL OF NEXT DESIRED BURST

RECEIVE —S1313

FIG.13

FIG.14

FIG.15

FIG.16

FIG.17

SWITCHING FROM SERVICE A TO SERVICE Q

OFF-TIME          OFF-TIME                    OFF-TIME

| FRAME GROUP | FRAME GROUP HEADER 1 | SERVICE A | SERVICE B | SERVICE C | FRAME GROUP HEADER 2 | SERVICE D | SERVICE E | SERVICE F | . . . | FRAME GROUP HEADER N | SERVICE I | SERVICE P | SERVICE Q |

TIME

CHECK SERVICE Q          CHECK SERVICE Q   START SERVICE Q

## FIG.18

SWITCHING FROM SERVICE A TO SERVICE Q

OFF-TIME

| FRAME GROUP | FRAME GROUP HEADER 1 | SERVICE A | SERVICE B | SERVICE C | FRAME GROUP HEADER 2 | SERVICE D | SERVICE E | SERVICE F | . . . | FRAME GROUP HEADER N | SERVICE I | SERVICE P | SERVICE Q |

TIME

START SERVICE Q

## FIG.19

EP 1 742 393 A2

SWITCHING FROM SERVICE A TO SERVICE Q

OFF-TIME    OFF-TIME

FRAME GROUP

FRAME GROUP HEADER 1

SERVICE A

SERVICE B

SERVICE C

FRAME GROUP HEADER 2

SERVICE D

SERVICE E

SERVICE F

FRAME GROUP HEADER N

SERVICE I

SERVICE P

SERVICE Q

. . .

TIME

CHECK SERVICE Q

START SERVICE Q

FIG.20

33